# EUROPÄISCHE PATENTSCHRIFT

(11) **EP 2 021 225 B1**
(45) Veröffentlichungstag und Bekanntmachung des Hinweises auf die Patenterteilung: **10.02.2010**
(21) Anmeldenummer: 07727694.7
(22) Anmeldetag: 03.04.2007
(51) Int. Cl.: B62D 15/02, B60W 10/20, B60W 30/12, B60W 50/06

(54) **VERFAHREN UND VORRICHTUNG ZUR VERBESSERUNG DES FAHRKOMFORTS BEI EINEM LENKASSISTENZSYSTEM**
METHOD AND APPARATUS FOR IMPROVING THE DRIVING COMFORT IN A STEERING ASSISTANCE SYSTEM
PROCÉDÉ ET DISPOSITIF POUR AMÉLIORER LE CONFORT DE CONDUITE DANS UN SYSTÈME DE DIRECTION ASSISTÉE

(30) Priorität: 12.05.2006 DE 102006022391
(43) Veröffentlichungstag der Anmeldung: 11.02.2009
(73) Patentinhaber: Robert Bosch GmbH, 70442 Stuttgart (DE)
(72) Erfinder: RUBIA, David, 71642 Ludwigsburg (DE)
(86) Internationale Anmeldenummer: PCT/EP2007/053223
(87) Internationale Veröffentlichungsnummer: WO 2007/131837

(56) Entgegenhaltungen:
- EP-A- 1 520 761
- EP-A- 1 602 553
- JP-A- 2006 117 088
- US-A1- 2004 262 063
- US-A1- 2005 125 135
- US-B1- 6 212 453

## Beschreibung

### Stand der Technik

Die Erfindung betrifft ein Verfahren zum Unterstützen eines Fahrers beim Lenken eines Fahrzeugs gemäß dem Oberbegriff der Patentansprüche 1, sowie eine entsprechende Vorrichtung gemäß dem Oberbegriff des Patentanspruchs 3.

Moderne Fahrzeuge sind üblicherweise mit einer Hilfskraftlenkung (Servolenkung) ausgestattet, die den Fahrer beim Lenken unterstützt. Bekannte Hilfskraftlenkungen umfassen eine Stelleinrichtung, wie z. B. einen Elektromotor oder eine Hydraulikpumpe, mittels der ein Unterstützungsmoment auf die Lenkung ausgeübt wird, das die vom Fahrer aufzubringenden Lenkkräfte reduziert. Die Höhe des Unterstützungsmoments ist abhängig von der aktuellen Fahrsituation, insbesondere vom Lenk- bzw. Lenkradwinkel und der Fahrgeschwindigkeit. Das Unterstützungsmoment wird üblicherweise von einem Steuergerät gemäß einer vorgegebenen Lenk-Charakteristik eingestellt.

Neben den genannten Hilfskraftlenkungen, die den Kraftaufwand beim Lenken verringern, sind aus dem Stand der Technik auch Lenksysteme bekannt, die in besonderen Fahrsituationen ein zusätzliches Stellmoment auf die Lenkung aufbringen, um den Fahrer zum Ändern der Lenkradstellung zu veranlassen. Diese Systeme werden auch als Fahrer-Lenkassistenzsysteme bezeichnet. Hiezu zählt z. B. auch ein LKS-System (LKS: Lane Keeping Support), das den Fahrer darin unterstützt, das Fahrzeug in der Fahrspur zu halten.

LKS-Systeme umfassen üblicherweise eine Umfeldsensorik, wie z. B. ein Videosystem, mit dem der Verlauf der Fahrspur sowie die relative Position des Fahrzeugs in der Fahrspur bestimmt oder mögliche Hindernisse erkannt werden können. Diese Systeme sind im normalen Fahrbetrieb, solange die Bewegungsbahn des Fahrzeugs etwa dem Fahrspurverlauf entspricht, nicht aktiv. In diesem Fall wird lediglich das Servomoment auf die Lenkung aufgebracht. Wenn jedoch die Bewegungsbahn des Fahrzeugs von der durch den Fahrspurverlauf vorgegebenen optimalen Bewegungsbahn zu stark abweicht oder eine andere Gefahrensituation besteht, erzeugt das System ein zusätzliches Stellmoment, das vom Fahrer haptisch erfasst werden kann und den Fahrer darauf hinweist, wie er die Lenkung betätigen müsste, um das Fahrzeug in der Fahrspur zu halten bzw. ein Ausweichmanöver zu fahren. Bei einem zu geringen Lenkradeinschlag spürt der Fahrer beispielsweise eine Abnahme der Lenkkräfte, wodurch er das Lenkrad automatisch stärker in die Kurve einschlägt. Bei einem zu starken Lenkradeinschlag erhöht das System dagegen die am Lenkrad wirkenden Lenkkräfte, wodurch der Fahrer das Lenkrad weiter in die Nulllage bewegt, sofern er dies möchte.

Bei jedem Lenkeingriff des Fahrer-Lenkassistenzsystems wird das charakteristische Lenkverhalten der Lenkung verändert, d. h. der Fahrer spürt am Lenkrad plötzlich eine unterschiedliche Gegenkraft. Das unterschiedliche Lenkgefühl ist für den Fahrer ungewohnt und kann störend sein, insbesondere wenn der Fahrer die vorgeschlagene Lenkbewegung nicht mitmachen möchte.

Aus der EP 1 602 553 A2 ist ein Fahrerunterstützungssystem mit einem Stellglied zum Lenken eines gelenkten.Rades eines Fahrzeugs bekannt, welches eine Fahrerunterstützungssteuerung zum Unterstützen eines Fahrers beim Fahren des Fahrzeugs durch Lenkung mittels des Stellglieds durchführt. Dabei weist das Fahrerunterstützungssystem eine Bildaufnahmeeinrichtung zum Aufnehmen eines Vorwärtsfotos vor dem Fahrzeug auf, eine Bestimmungseinrichtung zum Bestimmen einer Steuergröße des Stellglieds auf der Basis des durch die Bildaufnahmeeinrichtung erhaltenen Vorwärtsfotos, eine Begrenzungseinrichtung zum Begrenzen der Steuergröße, wenn eine zeitliche Änderung der Steuergröße des Stellglieds, welche durch die Bestimmungseinrichtung bestimmt wird, außerhalb eines vorbestimmten Bereichs ist; und eine Steuereinrichtung zum Steuern des Stellglieds, wobei die Begrenzungseinrichtung einen Grenzwert zum Begrenzen der zeitlichen Änderung der Steuergröße des Stellglieds so einstellt, dass der Grenzwert beim Start der Fahrerunterstützungssteuerung unterschiedlich zu dem Grenzwert bei der Fortführung der Fahrerunterstützungssteuerung ist.

Das Dokument EP 1 602 553 A2 ist als nächstliegenden Stand der Technik nach Oberbegriff des Anspruchs 1 zu sehen.

### Offenbarung der Erfindung

Es ist daher die Aufgabe der vorliegenden Erfindung, ein Lenkassistenzsystem zu schaffen, dessen Lenkeingriffe für den Fahrer jedoch wesentlich angenehmer sind und somit den Fahrkomfort wesentlich verbessern.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Ein wesentlicher Aspekt der Erfindung besteht darin, das zusätzlich angeforderte Stellmoment so anzupassen, dass es den Fahrer beim Lenken des Fahrzeugs nicht zu stark beeinträchtigt und insbesondere nicht stört. Hierzu wird das angeforderte Moment vorzugsweise in seinem Absolutwert und/oder in seiner Dynamik begrenzt, wie nachstehend beschrieben wird:
Gemäß der Erfindung wird der Gradient des zusätzlichen Stellmoments auf einen vorgegebenen Maximalwert begrenzt. Dadurch werden insbesondere Momentensprünge, die für den Fahrer unangenehm wirken können, vermieden. Der Lenkkomfort lässt sich dadurch wesentlich verbessern.

Der Maximalwert ist vorzugsweise abhängig vom Betrag des angeforderten Stellmoments, wobei der maximale Gradient im Falle großer Stellmomente vorzugsweise kleiner ist als bei kleineren Stellmomenten. D. h. je größer das zusätzliche Stellmoment ist, desto langsamer soll es an- bzw. absteigen, um dem Fahrer die Möglichkeit zu geben, das zusätzliche Moment zu kompensieren, falls er dies möchte. Die Gradientenbegrenzung wir vorzugsweise nur dann aktiv, wenn der Gradient größer ist als ein vorgegebener Schwellenwert.

Der maximale Gradient wird bei positiven und negativen Gradienten des Stellmoments unterschiedlich groß gewählt.

### Kurze Beschreibung der Zeichnungen

Die Erfindung wird nachstehend anhand der beigefügten Zeichnungen beispielhaft näher erläutert. Es zeigen:
- Fig. 1: eine schematische Blockdarstellung der wesentlichen Komponenten eines Fahrer-Assistenzsystems in einem KFZ;
- Fig. 2: die am Lenkrad wirkenden Kräfte und Momente;
- Fig. 3: die wesentlichen Verfahrensschritte zur Verbesserung des Lenkkomforts bei einem Lenkeingriff gemäß einer ersten Ausführungsform der Erfindung;
- Fig. 4: die wesentlichen Verfahrensschritte zur Verbesserung des Lenkkomforts bei einem Lenkeingriff gemäß einer zweiten Ausführungsform der Erfindung;
- Fig. 5: die wesentlichen Verfahrensschritte zur Verbesserung des Lenkkomforts bei einem Lenkeingriff gemäß einer dritten Ausführungsform der Erfindung;
- Fig. 6: die wesentlichen Verfahrensschritte zur Verbesserung des Lenkkomforts bei einem Lenkeingriff gemäß einer vierten Ausführungsform der Erfindung;
- Fig. 7: die wesentlichen Verfahrensschritte zur Verbesserung des Lenkkomforts bei einem Lenkeingriff gemäß einer fünften Ausführungsform der Erfindung.

### Ausführungsformen der Erfindung

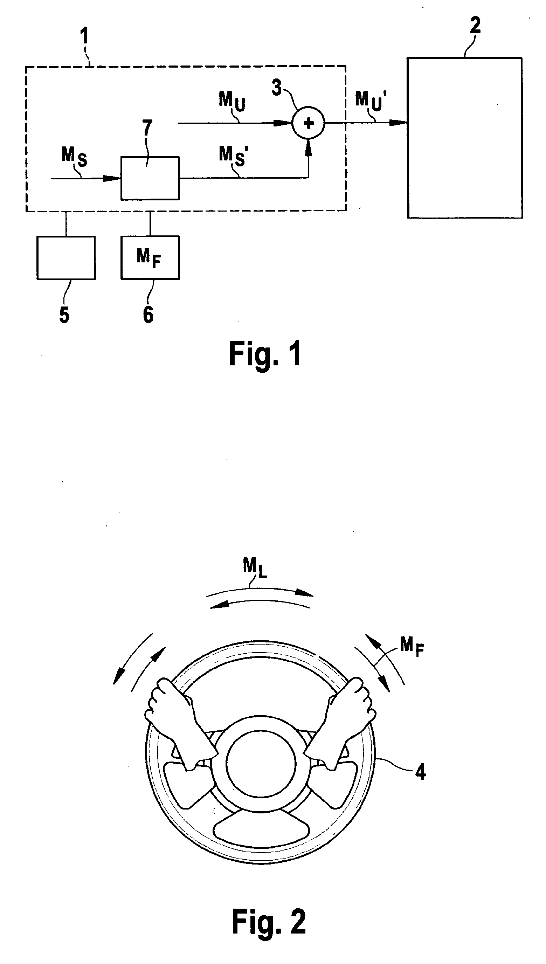

Fig. 1 zeigt eine schematische Blockdarstellung der wesentlichen Komponenten eines Fahrer-Lenkassistenzsystems, das den Fahrer beim Lenken seines Fahrzeugs unterstützt. Das Lenkassistenzsystem umfasst ein Steuergerät 1, das verschiedene Sensorsignale einer Sensorik 5, die den aktuellen Fahrzustand überwacht, verarbeitet. Die Sensorik 5 kann beispielsweise Rad-Drehzahlsensoren, einen Lenkwinkelsensor, oder im Falle eines LKS-Systems auch eine Umfeldsensorik umfassen. Das Steuergerät 1 ist ferner mit einem Fahrer-Handmomentensensor 6 verbunden, der die vom Fahrer aufgebrachten Lenkkräfte misst.

Im normalen Fahrbetrieb erzeugt das Steuergerät 1 ein Servomoment Mu, das mittels eines Lenkstellers auf die Lenkung 2 des Fahrzeugs ausgeübt wird. (Lenksteller und Lenkung sind hier in Block 2 zusammengefasst). In bestimmten Fahrsituationen, in denen das Fahrzeug z. B. zu weit von einer optimalen Bewegungsbahn abkommt, erzeugt das Steuergerät 1 oder eine externe Einrichtung, wie z. B. ein Fahrzeugregler, ein zusätzliches Stellmoment M_{S} (angefordertes Stellmoment). Dieses wird dann zusammen mit dem Servomoment M_{U} auf die Lenkung 2 aufgeprägt. Dadurch werden künstliche Lenkkräfte erzeugt, die vom Fahrer haptisch erfasst werden können und den Fahrer darauf hinweisen, wie er die Lenkung betätigen müsste, um das Fahrzeug in seiner Fahrspur zu halten bzw. ein Ausweichmanöver zu fahren. Die zusätzlichen Lenkkräfte sind i. d. R. nur so stark bemessen, dass sie vom Fahrer übersteuert werden können.

Das Aufprägen eines zusätzlichen Stellmoments M_{S} kann für den Fahrer überraschend oder unangenehm sein. Um das Lenkverhalten nicht zu stark zu beeinträchtigen wird daher vorgeschlagen, das zusätzliche Stellmoment M_{S} je nach Größe und aktueller Fahrsituation mittels einer separaten Einrichtung 7, vorzugsweise einem Software-Algorithmus, zu begrenzen oder anderweitig anzupassen. Das angepasste Stellmoment M_{S}' wird dann an einem Knoten 3 zum Servomoment M_{U} hinzu addiert. Das resultierende Servomoment ist mit M_{U}' bezeichnet.

Fig. 2 zeigt die an einem Lenkrad 4 wirkenden Kräfte und Momente. Zum einen wirkt ein Lenkrad- bzw. Rückstellmoment M_{L}, das versucht, das Lenkrad 4 in die Nulllage zurückzubewegen. Dieses Moment M_{L} resultiert aus mechanischen Lenkkräften der Lenkung 2 und dem modifizierten Servomoment M_{U}'. Zum anderen wirkt das vom Fahrer aufgebrachte Fahrer-Handmoment, das hier mit M_{F} bezeichnet ist.

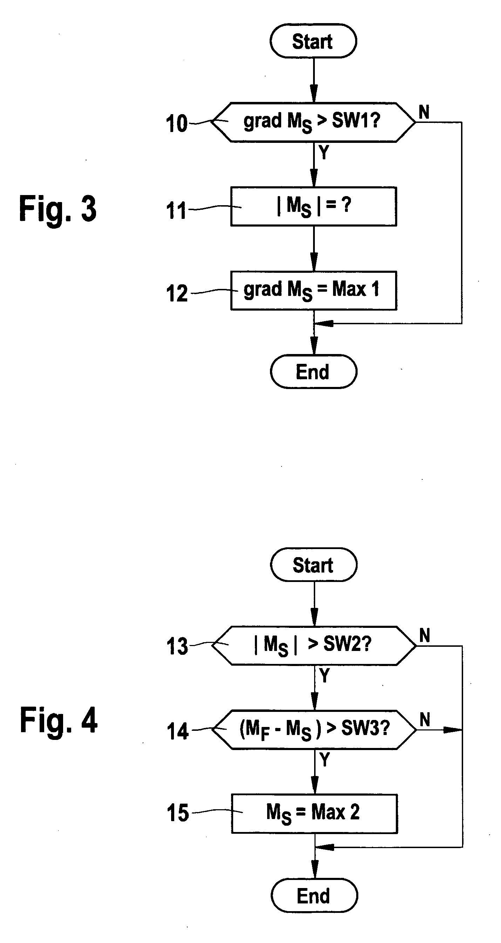

Das angeforderte Stellmoment M_{S} kann grundsätzlich in seinem Absolutwert und/oder seiner Dynamik begrenzt werden. Im Folgenden werden verschiedene Verfahren zum Begrenzen des Stellmoments M_{S} anhand der Fig. 3 bis Fig. 7 näher erläutert. Die Algorithmen zum Begrenzen bzw. Anpassen des angeforderten Stellmoments M_{S} sind vorzugsweise getrennt von der Einrichtung realisiert, die das Stellmoment M_{S} anfordert.

Fig. 3 zeigt die wesentlichen Verfahrensschritte eines Verfahrens, mit dem der Gradient eines angeforderten Stellmoments Ms auf einen vorgegebenen Maximalwert begrenzt wird. Dabei wird in Schritt 10 zunächst überprüft, ob der Gradient des Stellmoments M_{S} eine vorgegebene Schwelle SW1 überschreiten würde. Falls ja (J), wird in Schritt 11 der Betrag des angeforderten Stellmoments M_{S} bestimmt. Der (ansteigende oder fallende) Gradient des Stellmoments M_{S} wird dann in Schritt 12 auf einen Maximalwert Max1 begrenzt.

Der maximale Gradient Max1 ist vorzugsweise abhängig vom Betrag des Stellmoments M_{S}, wobei der maximale Gradient Max1 im Falle großer Stellmomente M_{S} vorzugsweise kleiner ist als bei kleineren Stellmomenten M_{S}. Dadurch werden große Stellmomente M_{S} grundsätzlich langsamer (mit einem betragsmäßig kleineren Gradienten) aufgeprägt als kleinere Stellmomente M_{S}. Auf diese Weise wird insbesondere vermieden, dass der Fahrer aufgrund eines Lenkeingriffs irritiert wird und erschrickt. Außerdem wird dem Fahrer dadurch genügend Zeit gegeben, um auf das Moment zu reagieren und dieses gegebenenfalls zu kompensieren, falls er dies wünscht.

Fig. 4 zeigt die wesentlichen Verfahrensschritte eines Verfahrens, mit dem die Differenz zwischen dem Fahrer-Handmoment M_{F} und dem angeforderten Stellmoment M_{S} auf einen vorgegebenen Schwellenwert begrenzt wird. Diese Funktion soll nur aktiv sein, wenn das angeforderte Stellmoment M_{S} größer ist als ein vorgegebener Schwellenwert SW2.

In Schritt 13 wird daher zunächst überprüft, ob der Betrag des angeforderten Stellmoments M_{S} größer ist als der Schwellenwert SW2. Falls ja (J), wird in Schritt 14 abgefragt, ob die Differenz aus dem Fahrer-Handmoment M_{F} (das vom Fahrer-Handmomentensensor 6 gemessen wird) und dem Stellmoment M_{S} einen Schwellenwert SW3 übersteigt. Falls ja (J), wird das Stellmoment M_{S} auf einen maximalen Wert Max2 begrenzt. Dadurch wird verhindert, dass am Lenkrad 4 zu hohe Kräfte wirken, die der Fahrer kompensieren muss, wenn er die vorgeschlagene Lenkbewegung nicht mitmachen will. Das angeforderte Stellmoment M_{S} soll schließlich nur die Reaktion des Fahrers hervorrufen und sie beschleunigen, aber den Fahrer nicht stören.

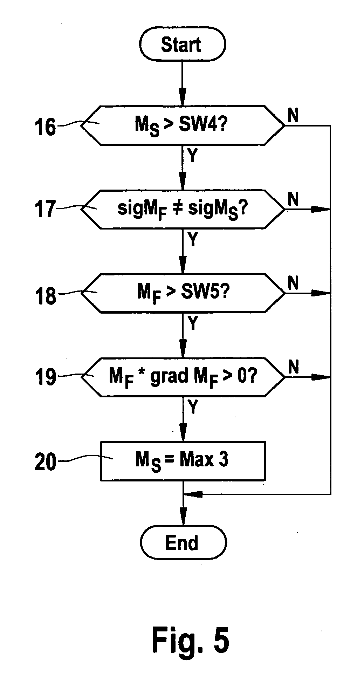

Fig. 5 zeigt die wesentlichen Verfahrensschritte eines Verfahrens, mit dem das Stellmoment M_{S} schnell abgebaut werden kann, wenn der Fahrer gegenlenkt. In diesem Fall wird zunächst in Schritt 16 überprüft, ob das angeforderte Stellmoment M_{S} einen vorgegebenen Schwellenwert SW5 überschreitet. Falls ja (J), wird in Schritt 17 abgefragt, ob das Fahrer-Handmoment M_{F} und das Stellmoment M_{S} unterschiedliche Vorzeichen aufweisen. Anderenfalls endet das Verfahren. Bei unterschiedlichen Vorzeichen (d. h. der Fahrer steuert gegen) wird in Schritt 18 abgefragt, ob das Fahrer-Handmoment einen vorgegebenen Schwellenwert SW6 übersteigt. Falls ja (J), wird in Schritt 19 das Produkt auf dem Fahrer-Handmoment M_{F} und dessen Gradienten grad(M_{F}) gebildet und festgestellt, ob dieses größer als Null ist. Anderenfalls endet wiederum das Verfahren. Falls das Ergebnis in Schritt 19 positiv (J) ist, wird in Schritt 20 das Stellmoment M_{S} auf einen Maximalwert Max3 begrenzt.

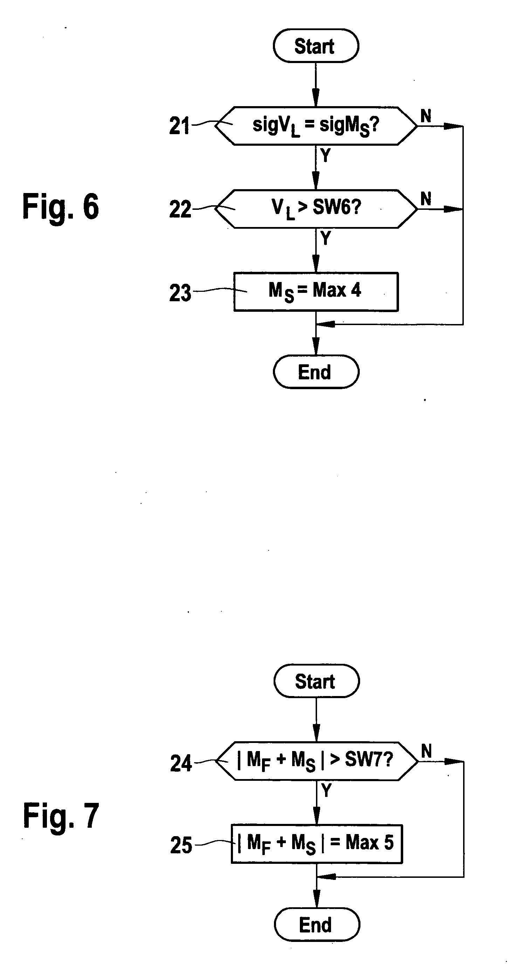

Fig. 6 zeigt eine Funktion, mit der das Stellmoment M_{S} auf einen vorgegebenen Maximalwert begrenzt werden kann, wenn das Lenkrad bereits in die Richtung des angeforderten Stellmoments M_{S} bewegt wird. Hierzu wird in Schritt 21 überprüft, ob die Lenkwinkelgeschwindigkeit V_{L} und das Stellmoment M_{S} in die gleiche Richtung weisen. Falls ja (J), wird in Schritt 22 abgefragt, ob die Lenkwinkelgeschwindigkeit V_{L} einen vorgegebenen Schwellenwert SW8 überschreitet. Falls ja (J), wird das Stellmoment auf einen bestimmten Wert max4 gesetzt (Schritt23).

Fig. 7 zeigt ein Verfahren, mit dem das Stellmoment M_{S} auf einen vorgegebenen Wert begrenzt werden kann, wenn die Summe aus dem Fahrer-Handmoment und dem Stellmoment eine vorgegebene Schwelle überschreitet. Hierzu wird in Schritt 24 zunächst überprüft, ob der Betrag der Summe aus dem Fahrer-Handmoment M_{F} und dem Stellmoment M_{S} einen vorgegebenen Schwellenwert SW9 überschreitet. Falls ja (J), wird in Schritt 25 die Summe auf einen vorgegebenen Maximalwert Max5 gesetzt. Das Stellmoment M_{S} wird dadurch entsprechend reduziert.

## Patentansprüche

1. Verfahren zum Unterstützen eines Fahrers beim Lenken eines Fahrzeugs, bei dem ein Servomoment (M_{U}), sowie ein zusätzliches Stellmoment (M_{S}, M_{S}') erzeugt wird, das zusätzlich auf die Lenkung (2) des Fahrzeugs ausgeübt werden kann, um den Fahrer zu einer Änderung der Lenkradstellung zu veranlassen, **dadurch gekennzeichnet, dass** der Gradient des Stellmoments (M_{S}') auf einem vorgegebenen Maximalwert (Max1) begrenzt wird und dass der Maximalwert (Max1) für positive und negative Gradienten unterschiedlich groß ist.

2. Verfahren nach Anspruch 1, **dadurch gekennzeichnet, dass** der Maximalwert (Max1) abhängig vom Betrag des Stellmoments (M_{S}) ist.

3. Vorrichtung zum Unterstützen eines Fahrers beim Lenken eines Fahrzeugs, umfassend ein Steuergerät (1), das ein Servomoment (M_{U}) sowie ein zusätzliches Stellmoment (M_{S}, M_{S}') erzeugt, das abhängig von der Fahrsituation zusätzlich auf die Lenkung (2) des Fahrzeugs ausgeübt werden kann, um den Fahrer zu einer Änderung der Lenkradstellung zu veranlassen, **dadurch gekennzeichnet, dass** das Steuergerät (1) einen Algorithmus umfasst, der das angeforderte Stellmoment (M_{S}) gemäß einem der vorstehend beanspruchten Verfahren begrenzt bzw. anpasst und ein modifiziertes Stellmoment (M_{S}') erzeugt.

4. Vorrichtung nach Anspruch 3, **dadurch gekennzeichnet, dass** ein Fahrer-Handmomentensensor (5) vorgesehen ist, mit dem das Fahrer-Handmoment (M_{F}) gemessen wird.

## Claims

1. Method for assisting a driver when steering a vehicle, in which method a servo torque (Mᵤ) and an additional actuating torque (Mₛ, M_{s'}), which can be additionally applied to the steering (2) of the vehicle in order to cause the driver to change the position of the steering wheel, is generated, **characterized in that** the gradient of the actuating torque (M_{s'}) is limited to a predefined maximum value (Max1), and **in that** the maximum value (Max1) is of different sizes for positive and negative gradients.

2. Method according to Claim 1, **characterized in that** the maximum value (Max1) is dependent on the absolute value of the actuating torque (Mₛ).

3. Apparatus for assisting a driver in steering a vehicle, comprising a control unit (1) which generates a servo torque (Mᵤ) and an additional actuating torque (Mₛ, Mₛ'), which can be additionally applied to the steering (2) of the vehicle as a function of the driving situation in order to cause the driver to change the position of the steering wheel, **characterized in that** the control unit (1) comprises an algorithm which limits or adapts the requested actuating torque (Mₛ) in accordance with one of the methods claimed above, and generates a modified actuating torque (M_{s'}).

4. Apparatus according to Claim 3, **characterized in that** a driver manual torque sensor (5), with which the driver manual torque (M_{f}) is measured, is provided.

## Revendications

1. Procédé d'assistance au conducteur dans la conduite d'un véhicule, dans lequel un servo-couple (Mᵤ) ainsi qu'un couple supplémentaire de commande (Mₛ, Mₛ') sont formés et peuvent être appliqués en supplément sur la direction (2) du véhicule pour assister le conducteur à modifier la position du volant,
**caractérisé en ce que**
le gradient du couple de commande (Mₛ') est limité à une valeur maximale prédéterminée (Max1) et **en ce que** la valeur maximale (Max1) présente des niveaux différents pour les gradients positifs et les gradients négatifs.

2. Procédé selon la revendication 1, **caractérisé en ce que** la valeur maximale (Max1) dépend du niveau du couple de réglage (Mₛ).

3. Dispositif d'assistance au conducteur dans la conduite d'un véhicule, qui comprend un appareil de commande (1) qui forme un servo-couple (Mᵤ) ainsi qu'un couple supplémentaire de commande (Mₛ, Mₛ') qui peuvent être appliqués en supplément sur la direction (2) du véhicule en fonction de la situation de conduite pour assister le conducteur à modifier la position du volant, **caractérisé en ce que**
l'appareil de commande (1) contient un algorithme qui limite ou adapte le couple de réglage (Mₛ) demandé selon l'une des procédés revendiqués plus haut et forme un couple de commande (Mₛ') modifié.

4. Dispositif selon la revendication 3, **caractérisé en ce qu'**il présente un détecteur (5) du couple manuel appliqué par le conducteur qui permet de mesurer le couple manuel (M_{F}) appliqué par le conducteur.
